# EUROPÄISCHE PATENTSCHRIFT

(11) **EP 1 537 018 B1**
(45) Veröffentlichungstag und Bekanntmachung des Hinweises auf die Patenterteilung: **21.06.2006**
(21) Anmeldenummer: 03750349.7
(22) Anmeldetag: 12.09.2003
(51) Int. Cl.: B63H 21/20, B63B 3/08

(54) **MARINE-(NAVY)SCHIFFSTYPEN-AUSRÜSTUNGSSYSTEM FÜR ELEKTRISCH ANGETRIEBENE MARINE-(NAVY)SCHIFFE UNTERSCHIEDLICHER GRÖSSE UND ANTRIEBSLEISTUNG**
MARINE-(NAVY) SHIP-TYPE EQUIPMENT SYSTEM FOR ELECTRICALLY DRIVEN MARINE-(NAVY) SHIPS HAVING DIFFERENT SIZES AND DRIVING POWER
SYSTEME D'EQUIPEMENT POUR DIFFERENTS TYPES DE BATEAU DE MARINE (MARINE DE GUERRE), NOTAMMENT POUR BATEAUX DE MARINE (MARINE DE GUERRE) A ENTRAINEMENT ELECTRIQUE DE DIFFERENTES GRANDEURS ET DE DIFFERENTES PUISSANCES

(30) Priorität: 14.09.2002 DE 20214297 U
(43) Veröffentlichungstag der Anmeldung: 08.06.2005
(73) Patentinhaber: SIEMENS AKTIENGESELLSCHAFT, 80333 München (DE)
(72) Erfinder: SCHULZE, Matthias, 21335 Lüneburg (DE); RZADKI, Wolfgang, 21509 Glinde (DE); SADLER, Karl-Otto, 22159 Hamburg (DE); SCHULZE HORN, Hannes, 45966 Gladbeck (DE)
(86) Internationale Anmeldenummer: PCT/DE2003/003035
(87) Internationale Veröffentlichungsnummer: WO 2004/026685

(56) Entgegenhaltungen:
- WO-A-02/057132
- FR-A- 2 616 967
- GB-A- 1 467 871
- US-A- 873 539
- DREGER W: "ENTWICKLUNGSTENDENZEN BEIM BAU ZUKUENFTIGER KORVETTEN UND FREGATTEN" SCHIFF UND HAFEN, SEEHAFEN-VERLAG ERIK BLUMENFELD. HAMBURG, DE, Bd. 53, Nr. 4, April 2001 (2001-04), Seiten 47-52, XP001112254 ISSN: 0938-1643
- GAMBLE B. AND GOLDMAN J.: "High temperature superconducting motors and generators for submarines and surface ships" PROCEEDINGS NAVAL SYMPOSIUM ON ELECTRIC MACHINES, 28. - 28. Juli 1997, Seiten 275-282, XP008000614 newport, USA.
- SHARKE P: "THE HUNT FOR COMPACT POWER" GEOPHYSICS, SOCIETY OF EXPLORATION GEOPHYSICISTS.THE AMERICAN SOCIETY OF MECHANICAL ENGINEERING., April 2000 (2000-04), Seite COMPLETE XP008000664 Tulsa , USA ISSN: 0016-8033
- EHRENBERG H D: "GEBAUTE EINHEITEN UND NEUESTE ENTWICKLUNGEN" SCHIFF UND HAFEN, SEEHAFEN-VERLAG ERIK BLUMENFELD. HAMBURG, DE, Bd. 48, Nr. 12, 1. Dezember 1996 (1996-12-01), Seiten 37-38, XP000641578 ISSN: 0938-1643

## Beschreibung

Die Erfindung betrifft ein Marine-(Navy)Schiffstypen-Ausrüstungssystem für elektrisch angetriebene Marine-(Navy)Schiffe unterschiedlicher Größe und Antriebsleistung, bei dem die Marine-(Navy)Schiffe, z.B. Fregatten, Korvetten, Schnellboote, unbemannte Kampfboote oder Versorgungsschiffe (Ausrüstungssystem-Schiffe) einheitliche Ausrüstungssegmente für Propulsion und Schiffsbetrieb unter Einschluss der Energieerzeugung, der Energieverteilung und Automation aufweisen.

Aus der WO 02/057132 Al ist ein schnelles militärisches Überwasserschiff bekannt, das den neuzeitlichen Anforderungen an Emissionsarmut und hoher Überlebensfähigkeit im Trefferfall entspricht. Es ist Aufgabe der Erfindung, ein Schiffstypen-Ausrüstungssystem anzugeben, das auf der Technik des bekannten schnellen militärischen Überwasserschiffs aufbaut und dabei insbesondere für neue Ausrüstungssystem-Schiffstypen eine erhebliche Kostensenkung erlaubt. Darüber hinaus soll auch die Einarbeitungszeit des technischen Personals bei diesen Ausrüstungssystem-Schiffstypen auf ein Minimum verkürzt und die Logistik vereinfacht werden.

Die Aufgabe wird im wesentlichen dadurch gelöst, dass die erfindungsgemäßen Schiffe über die Ausrüstungssystem-Typen "Fregatte" und "Korvette" hinaus auf kleinere Ausrüstungssystem-Schiffstypen erstreckt werden, wobei für die einzelnen Marineschiffstypen Schiffskörper vorgesehen sind, die typabhängig, d.h. größen- und aufgabenspezifisch ausgebildet sind, während die Ausrüstungssegmente für Propulsion und Schiffsbetrieb unter Einschluss der Energieerzeugung, der Energieverteilung und Automation im Prinzip typunabhängig ausgestaltet und je nach Antriebsleistung und Aufgabe der einzelnen Marine-(Navy) Schiffe kombinierbar sind, wobei die Ausrüstungssegmente vorgefertigt an unterschiedlichen Orten im Schiffskörper installierbar ausgebildet sind, gegebenenfalls in Anpassung an den speziellen Schiffstyp durch Vereinfachung oder Verkleinerung. So ist es möglich, in größeren Stückzahlen produzierte, modernste Ausrüstungssegmente für unterschiedliche neue Schiffstypen einzusetzen. Die Serien in der Herstellung werden entsprechend vergrößert, der Entwicklungskostenanteil verringert und auch die Wartuna, Ersatzteilhaltung, Bereitstellung von Austauschausrüstungssegmenten etc. wird entsprechend kostengünstiger. Ermöglicht wird dies durch die erfindungsgemäße typunabhängige Ausbildung und Kombinierbarkeit der einzelnen Ausrüstungssegmente, um die erforderliche Gesamtantriebsleistung für die Fahrt bis zur Marschgeschwindigkeit und für das Erreichen der Gefechtsgeschwindigkeit bzw. der Höchstgeschwindigkeit bereitzustellen.

Von besonderem Vorteil ist es für den Systemgedanken, wenn die Ausrüstungssegmente im Verhältnis zu ihrer Leistung klein und leicht ausgebildet sind und dafür elektrische Einrichtungen in Hoch-Temperatur-Supraleitungs-Technik aufweisen. Diese Einrichtungen können sowohl Motoren als auch Generatoren oder Strombegrenzer für das im Schiff notwendige Energieversorgungsnetzwerk sein. Durch die sehr vorteilhafte Verwendung von Komponenten, die in HTS-Technik ausgebildet sind, werden die Gewichte und der Platzbedarf der einzelnen Ausrüstungssegmente für die Energieerzeugung und die Propulsion sowie für die für eine sichere Energieversorgung notwendigen Schalteinrichtungen so weit verkleinert, dass eine sozusagen beliebige Kombinierbarkeit im Schiff und eine Installation an dem jeweils günstigsten Ort im Schiff möglich ist. Es ist dabei vorteilhaft möglich, jeden gebildeten Schiffssicherungsbereich sowohl mit autonom arbeitenden Propulsions-, als auch mit dazu passenden Energieerzeugungseinrichtungen auszurüsten, so dass sich Ausrüstungssystem-Typschiffe ergeben, die auch nach Treffern und den sich dadurch ergebenden Ausfällen in einem Schiffssicherungsbereich, auch Mittschiffs oder Achtern, durch größere Flugkörper oder durch Torpedos, noch reaktionsfähig sind und sich zumindest vom Ort der Trefferaufnahme entfernen können.

Während es für die Waffensystemteile und die navigatorische Ausrüstung von Marine-(Navy)Schiffen schon lange üblich ist, schiffstypenunabhängige Ausrüstungssegmente einzusetzen (z.B. (DREGER W: ENTWICKLUNGSTENDENZEN BEIM BAU ZUKUENFTIGER KORVETTEN UND FREGATTEN SCHIFF UND HAFEN, SEEHAFEN-VERLAG ERIK BLUMENFELD. HAMBURG, DE, Bd. 53, Nr. 4, April2001 (2001-04), Seiten 47-52, ISSN: 0938-1 643)) galt dies bisher als für die Propulsionsausrüstungssegmente und die Ausrüstungssegmente für den Schiffsbetrieb sowie für die Energieerzeugung, die Energieverteilung und zum Teil auch für die Automation als nicht möglich. Diese Segmente waren bisher so ausgebildet, dass sie speziell auf jede Schiffsgröße abgestimmt wurden und dass das jeweilige Schiff auf diese Segmente hin ausgelegt wurde. Sonst stimmten der Trimm, das Manövrier- und das allgemeine Seeverhalten etc. nicht. Mit den erfindungsgemäßen modernen, neuen, kleinen und miteinander kombinierbaren Ausrüstungssegmenten hat sich jedoch erstaunlicherweise herausgestellt, dass auch die schlank gebauten Kriegsschiffe mit ihrem hohen Platzbedarf unter Deck mit einheitlichen Ausrüstungssegmenten für die Propulsion und den Schiffsbetrieb unter Einschluss der Energieerzeugung, der Energieverteilung und Automation vorteilhaft unter Sicherheitserhöhung ausrüstbar sind, ohne dass Abstriche in Bezug auf die Seetüchtigkeit, die Manövrierbarkeit, die Einsatzfähigkeit etc. gemacht werden müssen. Dabei ist insbesondere die Ausführung der entsprechenden Ausrüstungssegmente in HTS-Technik maßgeblich, die - wie sich bei genauer Betrachtung der auszurüstenden Schiffe gezeigt hat - eine Ausrüstung von Marine-(Navy)Schiffen mit einheitlichen Ausrüstungssegmenten auch bei unterschiedlichen Schiffsgrößen, für unterschiedliche Aufgaben etc. ermöglichen.

Erfindungsgemäß ergibt sich die Bereitstellung von elektrischen Ausrüstungssegmenten für Propulsion und Schiffsbetrieb unter Einschluss der Energieerzeugung, -verteilung und Automation, wie z.B. Brennstoffzellenanlagen, Gasturbinengeneratorsätzen, Dieselmotorgeneratorsätzen, Ruderpropellerantriebssystemen, Waterjet-Antriebssystemen, Inbord-Antriebssystemen, Energieverteilungssystemen in Mittelspannung und/oder Niederspannung AC- und/oder DC-Ausführung sowie von Automationssystemen, die modular einsetzbar und dabei miteinander kombinierbar sind, damit sie in ein Schiffstypen-Ausrüstungssystem für Schiffe von unterschiedlicher Größe und Leistung integrierbar sind und somit verschiedenen nationalen Marinen eine optimale Konfiguration ihrer Überwasser-(Navy)Marineschiffe ermöglichen. Diese Ausrüstungssegmente sind auch für zivile Schiffe verwendbar, insbesondere für Schiffe mit hoheitlichen Aufgaben oder für Superyachten ergibt sich eine besondere Eignung.

In Ausgestaltung der Erfindung ist vorgesehen, dass die Ausrüstungssegmente im Verhältnis zu ihrer Leistung kleine und leichte Propulsionsausrüstungssegmente umfassen, die elektrische Motoren in Hoch-Temperatur-Supraleitungs-(HTS)Technik aufweisen, insbesondere elektrische Motoren mit mit Flüssigneon oder Flüssigstickstoff direkt oder indirekt gekühlten Läuferwicklungen. Durch die Verwendung von Motoren in Hoch-Temperatur-Supraleitungs-(HTS)Technik können die bei Schiffsantrieben auftretenden erheblichen Gewichts- und Volumenprobleme elegant gelöst werden. So ist es beispielsweise möglich, elektrische Ruderpropeller im Leistungsbereich zwischen 5 und 8 Megawatt mit weniger als einem Drittel des Gewichts konventioneller Motoren bzw. kompletter Ruderpropeller auszuführen. Gleichzeitig kann ein besseres elektromagnetisches und Geräuschverhalten erreicht werden. Dies bedeutet, dass die Ausrüstungssystem-Schiffe, insoweit wie sie mit elektrischen Ruderpropellerantrieben (PODS) ausgerüstet sind, von Unterwasserfahrzeugen schlechter detektierbar sind als Marine-(Navy)Schiffe mit herkömmlichen Antrieben.

In weiterer Ausgestaltung der Erfindung ist vorgesehen, dass die Ausrüstungssegmente im Verhältnis zu ihrer Leistung kleine und leichte Energieerzeugungseinheiten aufweisen, die als Verbrennungskraftmaschinen-Generatorsätze auf Einheitsfundamenten ausgebildet sind, wobei die Verbrennungskraftmaschinen-Generatorsätze mit Generatoren in HTS-Technik versehen sind, die insbesondere Wicklungen aufweisen, die mit Flüssigneon oder Flüssigstickstoff direkt oder indirekt gekühlt sind. Die Verbrennungskraftmaschinen-Generatorsätze werden bei den Ausrüstungssystem-Schiffen insbesondere für den Antrieb von Waterjets verwendet oder aber für Inbordmotoren. Auch hier gilt, dass der-Platzbedarf und die Gewichte besonders gering sind, so dass beispielsweise ein Waterjetantrieb in dem Doppelboden unmittelbar vor den Waterjets angeordnet werden kann. Gleichzeitig gilt auch hier, dass die Detektierbarkeit gegenüber herkömmlichen elektrischen Maschinen verringert wird.

In Ausgestaltung der Erfindung ist weiterhin vorgesehen, dass die Motoren und Generatoren schockfest mit einer äußeren und einer inneren Schockdämpfung ausgebildet sind, wobei die äußere Schockdämpfung darin besteht, dass die Motoren und Generatoren elastisch aufgestellt sind, insbesondere auf Standardfundamenten und dass zusätzlich ein elastisch mit dem Maschinengehäuse verbundenes Ständer-Läufer-System vorhanden ist, das sich unabhängig von dem Gehäuse bewegen kann, d.h. eine im Gehäuse unabhängig bewegliche Einheit mit eigenen Schockdämpfungselementen bildet. Durch diese Ausbildung eines Schockdämpfungssystems für die rotierenden elektrischen Komponenten der Ausrüstungssystem-Schiffe ergibt sich eine wesentliche Erhöhung der Schockfestigkeit gegenüber nur auf schockgedämpften Fundamenten aufgestellten elektrischen Maschinen. Insbesondere das Ständer-Läufer-System, das sich unabhängig von dem Gehäuse bewegen kann, erhöht die Schockfestigkeit ganz erheblich. Ein Anschlagen der rotierenden Teile an die feststehenden Teile auch bei Treffern in unmittelbarer Nähe erfolgt nicht mehr, so dass die elektrischen Maschinen auch nach einem Nahtreffer unbeschädigt weiterlaufen können. Die Schockfestigkeit wird auch noch dadurch weiter erhöht, dass erfindungsgemäß vorgesehen ist, dass die Ständer der Motoren und Generatoren Luftspaltwicklungen aufweisen. Luftspältwicklungen erlauben sehr große Luftspalte bis zu 50 mm, so dass hier ein zusätzlicher Sicherheitsabstand zwischen den rotierenden und den feststehenden Teilen der elektrischen Motoren und Generatoren vorgesehen werden kann. Es ist dabei besonders vorteilhaft möglich, in dem gebildeten großen Luftspalt das Gehäuse einen Kryostaten unterzubringen, so dass sich so erfindungsgemäß die Möglichkeit ergibt, einen Läufer in Hoch-Temperatur-Supraleitungstechnik schockgedämpft unterzubringen. Da Luftspaltwicklunaen es erlauben. Ständer und Läufer bei noch gutem Wirkungsgrad eisenzahnlos auszubilden, wird auch gleichzeitig das elektromagnetische Verhalten und Geräuschverhalten der elektrischen Maschinen verbessert. Insgesamt ergibt sich also eine für die Ausrüstungssystem-Schiffe besonders geeignete, vorteilhafte elektrische Motoren- oder Generatorenausführung.

In weiterer Ausgestaltung der Erfindung ist vorgesehen, dass die Schiffskörper ein Leitungssystem für flüssiges Neon oder flüssigen Stickstoff aufweisen, an das HTS-Komponenten, wie Motoren, Generatoren und Strombegrenzer, insbesondere über Schnellkupplungen, anschließbar sind und dass im Schiffskörper zumindest eine Luftzerlegungs.einheit für die Erzeugung von flüssigem Stickstoff oder eine Speichereinheit für flüssiges Neon angeordnet ist, die über Rohrleitungen mit den einzelnen HTS-Komponenten im Schiffskörper verbunden ist. So ist es möglich, Kühlmittelverluste in oder an den einzelnen HTS-Komponenten auszugleichen und die einzelnen HTS-Komponenten sicher arbeitsfähig zu erhalten. Die Verwendung von Schnellkupplungen erlaubt dabei eine schnelle Auswechslung von getroffenen Komponenten durch Reserveeinheiten. Die bisher nur schlecht mögliche Auswechselung auf hoher See ist ja durch die kleine und leichte Ausführung der HTS-Komponenten ohne weiteres möglich. Dies gilt auch, wenn eine dezentrale Kühlmittelversorgung gewählt wird.

In weiterer Ausgestaltung der Erfindung ist vorgesehen, dass die einzelnen Typschiffe emissionsarm arbeitende, dezentral installierbare, Elektroenergieerzeugungseinheiten aufweisen, wobei insbesondere vorgesehen ist, dass die einzelnen Ausrüstungssystem-Schiffe Verbrennungskraftmaschinen mit einer Abgaseinführung in das Umgebungswasser der Schiffsrümpfe aufweisen. So ergibt sich eine insgesamt emissionsarm arbeitende Ausführung eines Ausrüstungssystem-Schiffs, wobei vorteilhafterweise auch weitere, leicht detektierbare Abgasströme, wie die warme Luft aus Klimaanlagen oder die Abgase von Reformern zur Erzeugung von Wasserstoff mit in die Abgaseinführungssysteme für Abgase in das Umgebungswasser der Schiffsrümpfe einbezogen werden.

Es ist weiterhin vorgesehen, dass die Ausrüstungssystem-Typschiffe emissionslos arbeitende Energieversorgungseinheiten, insbesondere in Form von luftatmenden Brennstoffzellen aufweisen, die vorzugsweise ihre Energie in ein DC-Netz einspeisen. Durch die Verwendung von luftatmenden Brennstoffzellen erübrigt sich die Mitführung von reinem Sauerstoff zum Betrieb der Brennstoffzellen, so dass sich eine erhebliche Vereinfachung in der Versorgung der Brennstoffzellen mit Reaktionsgasen ergibt. An Bord der Ausrüstungssystem-Schiffe müssen sich lediglich Wasserstoffspeicher befinden oder Reformer, die aus einem flüssigen Kohlenwasserstoff Wasserstoff erzeugen. Da derartige Reformer in mannigfaltiger Ausgestaltung bekannt sind, steht insgesamt ein emissionslos arbeitendes Propulsionssystem für die Ausrüstungssystem-Typschiffe zur Verfügung, das ohne weiteres einsetzbar ist. Während bei den Propulsionskomponenten, wie Motoren und Generatoren, bisher vorwiegend Prototypen existieren, die auch schon längere Erprobungszeiten hinter sich haben, handelt es sich bei den emissionslos arbeitenden Energieversorgungseinheiten um eine bereits erprobte Technik, die z.B. im Bereich der U-Boote zum Einsatz kommt.

In Ausgestaltung der Erfindung ist dabei vorgesehen, dass die Brennstoffzellen als PEM-Brennstoffzellen ausgebildet sind oder dass sie als Methanol-Direkt-Fuelcells (MDFC) oder Molten-Carbonate-Fuelcells (MCFC) ausgebildet sind. Besonders vorteilhaft ist dabei aus betriebstechnischen und aus Kostengründen, wenn PEM-Zellen und Brennstoffzellen mit höherer Betriebstemperatur einen Energie- und Wärmeverbund bilden, in dem sie ihrer unterschiedlichen Dynamik entsprechend Energie bedarfsgerecht erzeugen. Es ist dabei beispielsweise vorgesehen, dass die PEM-Zellen den hochdynamischen Anteil des Energieverbrauchs übernehmen und die Brennstoffzellen mit höherer Temperatur den Grundlastbetrieb. So ergeben sich erhebliche Kostenvorteile, da die PEM-Brennstoffzellen wegen ihres hohen Katalysatoranteils und ihrer ebenfalls kostenintensiven Membranen und der damit verbundenen einzelnen Komponenten sehr kostspielig sind. Dies trifft für die Brennstoffzellen höherer Temperatur nicht entsprechend zu, so dass sich ein insgesamt kostengünstigeres und nur relativ mehr Gewicht und Raum einnehmendes System bilden lässt. Erfindungsgemäß werden die durch den Betrieb der Brennstoffzellen höherer Temperatur und/oder der Dieselreformer entstehenden Abgase dem Umgebungswasser der Schiffsrümpfe beigemischt. Durch Infrarotdetektoren sind ja nicht nur Abgasfahnen, sondern auch russfreie Abgasströme aufgrund der auftretenden Temperaturdifferenzen detektierbar. Durch die Einleitung aller Wärmeströme in das Umgebungswasser wird deren Detektierbarkeit erheblich erschwert, bzw. ist horizontal nicht mehr möglich. Lediglich eine Ortung des erwärmten Heckwassers eines erfindungsgemäßen Ausrüstungssystem-Typschiffes ist noch durch höchst empfindliche Satelliten möglich. Deren Umlaufzeit ist jedoch nicht so gering, dass nicht zwischen einem Detektionsereignis und dem nächsten eine erhebliche Veränderung des Schiffsorts stattgefunden haben kann. Der Ort, an dem sich ein Systemschiff aufhält, ist daher durch Infrarotdetektoren nur noch sehr sporadisch ermittelbar.

In weiterer Ausgestaltung der ruderblattlosen Ausbildung der Ausrüstungssystem-Schiffe ist vorgesehen, dass sie unabhängig voneinander steuerbare Waterjets, insbesondere paarweise angeordnete Waterjets aufweisen. So ist eine Kursänderung der Ausrüstungssystem-Schiffe auch noch möglich, wenn einmal unwahrscheinlicherweise sowohl die Thruster als auch die Ruderpropeller ausfallen sollten. Die Ausrüstungssystem-Schiffe sind also noch manövrierfähig, wenn von den drei Schiffsicherungsbereichen Bug, Heck, Mittelschiff zwei getroffen sind. Entsprechend werden auch die einzelnen Energieerzeugungsaggregate im Schiff verteilt, damit die jeweils noch funktionsfähigen Vortriebs- und Steuerkomponenten mit Energie versorgt werden können.

In weiterer Ausgestaltung der Erfindung ist vorgesehen, dass die Ausrüstungssystem-Schiffe AC- und DC-Teilnetze zur Verbindung der einzelnen Energieerzeugungs- und -verbrauchereinheiten aufweisen. Durch die Verbindung von AC- und DC-Teilnetzen in den Ausrüstungssystem-Schiffen ist es möglich, die unterschiedlichen Energieerzeuger- und -verbraucher, die sich an Bord der Ausrüstungssystem-Schiffe befinden, jeweils anforderungsgerecht und somit optimiert elektrisch miteinander zu verbinden. Es ist dabei vorteilhaft vorgesehen, dass zwischen den Teilnetzen Stromrichter angeordnet sind, die die Teilnetze miteinander verbinden. So können die Teilnetze unterschiedliche Spannungen und im Fall der AC-Teilnetze auch unterschiedliche Frequenzen aufweisen. Des weiteren ist es möglich, sie auf die unterschiedlichen Ströme auszulegen, die in ihnen zu den Verbrauchern fließen sollen.

In besonderer Ausgestaltung ist dabei vorgesehen, dass zwischen den Brennstoffzellen und den elektrischen Ruderpropellern ein DC-Netz vorgesehen ist, das mit einem HTS-Strombegrenzer ausgerüstet ist. Die elektrischen Ruderpropeller sind erfindungsgemäß die Hauptverbraucher von DC-Energie, die Brennstoffzellen die Hauptenergieerzeuger für den normalen Betrieb. Durch einen HTS-Strombegrenzer können Kurzschlüsse, z.B. durch einen Treffer hervorgerufen, aber auch durch einen Isolationsfehler, sicher beherrscht werden, ohne dass es zu einem Lichtbogen im Schiff kommt, der nur durch große Schalter abgeschaltet werden kann. Bei dem Einsatz von mechanisehen DC-Schaltern ist es nachteilig, dass diese einen Ausblasraum benötigen, aus dem im Betätigungsfall giftige Gase ausströmen. Dies kann zu einer erheblichen gesundheitlichen Beeinträchtigung von in der Nähe befindlichen Personen führen und ist durch den Einsatz von HTS-Strombegrenzern mit Sicherheit ausgeschlossen. HTS-Strombegrenzer sind ebenso wie die HTS-Motoren und -Generatoren in einem fortgeschrittenen Entwicklungsstadium und können bereits produziert und eingesetzt werden.

HTS-Strombegrenzer werden vorteilhaft auch zwischen den einzelnen Teilnetzen eingesetzt, insbesondere zwischen DC-Teilnetzen, um eine problemlose Trennung der einzelnen Netze voneinander zu ermöglichen. Besonders vorteilhaft ist dabei, dass HTS-Strombegrenzer bereits in einer Ausführung mit Flüssigstickstoffkühlung zur Verfügung stehen, hier also auch schon jetzt nicht auf das teure und in Speichern mitzuführende flüssige Neon zurückzugreifen ist. Durch die Verwendung von HTS-Strombegrenzern kann erfindungsgemäß vorteilhaft ein Energieversorgungssystem für Ausrüstungssystem-Typschiffe gebildet werden, das in bisher unbekannter Weise sicher und dabei variabel ausgestaltet werden kann.

In einer besonderen Ausführung der Erfindung ist vorgesehen, dass zwischen dem, insbesondere durch eine Gasturbine angetriebenen, Generator für die Waterjets ein Teilnetz höherer Frequenz, z.B. bis 400 Hz, angeordnet ist. Durch die Verwendung eines Teilnetzes höherer Frequenz zur Versorgung der Waterjets mit Elektroenergie können sehr vorteilhafterweise kleinere Generatoren als bisher üblich eingesetzt werden, wobei zwischen den Generatoren und den schnelllaufenden Gasturbinen auch kleinere Getriebe möglich sind. Insgesamt ergibt sich durch die höhere Frequenz eines Waterjet-Versorgungsteilnetzes, dass die Gasturbinen-Generatoreinheit zur Versorgung der Waterjets mit Elektroenergie auch in MW-Größe so klein ausgeführt werden kann, dass sich diese im Doppelboden eines Systemschiffs befinden kann. Von besonderem Vorteil ist die Verwendung von Teilnetzen höherer Frequenz bei kleineren Schiffen, da hier das Gewichtsproblem und das Platzproblem noch gravierender ist als bei größeren Einheiten. Auch hier wird also vorteilhaft mit Teilnetzen unterschiedlicher Spannungen und Frequenzen gearbeitet.

In weiterer Ausgestaltung der Erfindung ist vorgesehen, dass die Typschiffe ein Automätisierungssystem aufweisen, das eine Automationszentrale aufweist, die über ein, insbesondere redundant ausgeführtes, Bussystem, insbesondere über Glasfaserbusse mit den einzelnen Schiffsbereichen verbunden ist. Das Bussystem ist vorteilhafterweise erfindungsgemäß als segmentiertes Netzwerk ausgebildet, wobei der Bus selbst vorzugsweise redundant ausgelegt ist und das segmentierte Netzwerk die einzelnen Schiffssicherungsbereiche redundant mit der Zentrale verbindet. So ergibt sich ein Höchstmaß von Übertragungssicherheit, das der Zentrale auch nach schweren Treffern erlaubt, noch auf die einzelnen Schiffssicherungsbereiche zuzugreifen.

Die Zentrale selbst ist vorteilhaft ganz oder teilautomatisch arbeitend ausgebildet und derart aufgebaut, dass in ihr auch systemgesteuerte Entscheidungen gefällt werden können. Üblicherweise stellt die Zentrale lediglich der Schiffsführung Informationen für ihre Entscheidungen zur Verfügung. Bei Treffern in die Zentrale oder bei sonstigen schwerwiegenden Störungen des Schiffsbetriebs ist es jedoch manchmal erforderlich, dass das Schiff ohne menschliche Entscheidungen zunächst automatisiert weiterläuft. Dies ist erfindungsgemäß vorgesehen.

Für den üblichen Betrieb ist vorgesehen, dass die Zentrale ein Beratersystem aufweist, das als übergeordnete Ebene zur Automation ausgebildet ist und die Anzeige aller Messwerte, die Darstellung der Anlagenstati und der Schaltungskonstellationen erlaubt. So ist sichergestellt, dass üblicherweise eine von einem menschlichen Bediener gefällte Entscheidung zur Verfügung steht, dies ist besonders im Gefechtsfall wichtig, da auch das beste Expertensystem nicht alle Gefechtslagen vorhersehen kann. Der Regelfall wird also die bedienergeführte Schiffsführung sein, wobei das Automationssystem Entscheidungshilfen bis hin zu Manövervorschlägen gibt.

Die Ausrüstungssystem-Schiffe sind vorteilhaft weiterhin mit einem LifeCycle-Managementsystem und Zustandsmonitoringsystem zur Steuerung der Logistik ausgerüstet. So kann von dem Systemgedanken besonders günstig Gebrauch gemacht werden. Durch die Einheitlichkeit der einzelnen im Schiff vorhandenen Komponenten ist es möglich, einen schnellen Austausch von Komponenten vorzusehen, die am Ende ihres Lebenszyklus angekommen sind oder die eine Beschädigung aufweisen. Die in großer Zahl hergestellten und zentral oder auch dezentral gelagerten Komponenten können dann schnell zum Ausrüstungssystem-Schiff gebracht und dort ausgetauscht werden.

In weiterer Ausgestaltung der Erfindung ist vorgesehen, dass die Ausrüstungssystem-Schiffe ein einheitliches Battle-Damage-Controlsystem aufweisen, das in die Automatisierungssysteme eingearbeitet ist und auch eine Darstellung aller Innenräume und ihrer Zustände auf zumindest einem Monitor erlaubt. So kann vorteilhaft ein Betrieb der Ausrüstungssystem-Schiffe mit wesentlich verringerten Mannschaften erfolgen, da Lecksuchtrupps oder Schadenssuchtrupps weitestgehend überflüssig werden. Das Battle-Damage-Controlsystem ist in der Lage, alle Schäden am Schiff und im Schiff zu melden und auf der Brücke darzustellen. Gegenmaßnahmen können automatisch eingeleitet oder nach Anweisung ausgeführt werden. Auch hierbei kann vorteilhaft ein Expertensystem eingesetzt werden.

Die erfindungsgemäßen Ausrüstungssystem-Schiffe sind erfindungsgemäß in der Lage entweder automatisch systemgesteuerte Entscheidungen vorzunehmen, wenn die Sicherheitslage es erfordert, oder zumindest Entscheidungsvorlagen für den Bediener anzugeben, die er annehmen oder verwerfen kann. Die Automation als Basis für die Entscheidungen ermittelt Prozessdatenmesswerte, Anlagenstati, Schaltungskonstellationen und kann sie darstellen und aus dieser Menge der Prozessdaten entwickelt ein Decision Support System/Expertensystem einen Entscheidungsvorschlag, der dem Bediener die aufbereitete Lage präsentiert, so dass er auf der Basis des vorliegenden Schiffszustandes entscheiden kann. Er kann dabei die Entscheidungsvorlagen des Systems akzeptieren oder aufgrund der taktischen Lage z.B. verwerfen. So kann im Extremfall z.B. ein Verlust von Kühlmittel in den HTS-Komponenten akzeptiert werden, auch wenn nach einiger Zeit gravierende Schäden zu erwarten sind.

Im Rahmen des Battle-Damage-Controlsystems werden die Zustände der Innenräume und auch die Situation auf dem Oberdeck aufbereitet dargestellt und auch auf unterschiedliche Eingangskanäle im Schiff verteilt, so dass sich der Entscheider nicht auf der Brücke befinden muss. Er kann sich erfindungsgemäß an unterschiedlichen Stellen des Systemschiffs in das Automations- und Battle-Damage-Controlsystem einklinken und auch, z.B. vom Heck aus, das Schiff führen.

Für die Ausrüstungssystem-Schiffe sind Energieerzeugungs- und Propulsionsausrüstungssegmente unterschiedlicher Leistung vorgesehen, so z.B. 7 Megawatt Leichtgewichtsruderpropeller mit HTS-Motoren sowie 7 Megawatt Waterjets mit HTS-Antriebsmotor für eine Verwendung in Fregatten, Korvetten und einem Schnellboot, sowie ein leicht gedrosselter Waterjet mit HTS-Antriebsmotor zur Verwendung in einem unbemannten Kampfboot. Dazu kommen z.B. Gasturbinen/Dieselmotor-HTS-Generatorenaggregate unterschiedlicher Leistung und mit Fundamenten für unterschiedliche Einsatzorte in den Ausrüstungssystem-Schiffen mit Leistungen von 1 Megawatt, 2 Megawatt, 4 Megawatt und 16 Megawatt. Diese Ausrüstungssegmente können sowohl in Fregatten als auch in Korvetten, Schnellbooten und im unbemannten Kampfboot eingesetzt werden. Die Brennstoffzellenmodule für die Brennstoffzellenanlagen können aufgrund ihrer prinzipiellen Modularität unterschiedliche Größen haben, so dass lediglich die einzelnen Module z.B. 30 bis 40 KW oder 120 bis 150 KW standardisiert sind. Des weiteren werden standardisierte Energieverteilungs- und Bordstromversorgungssegmente verwendet, die in ihren Grundteilen für Fregatten, Korvetten, Schnellboote und Kampfboote gleich sind. Lediglich ihre Leitungslängen etc. sind unterschiedlich. Die Automation für die Ausrüstungssystem-Schiffe ist im Prinzip für alle Schiffe gleich, es versteht sich jedoch ; dass aufgabengerecht andere Sensoriken gewählt und andere Darstellungen verwendet werden können.

Die Erfindung wird anhand von Zeichnungen näher erläutert, aus denen, ebenso wie aus den Unteransprüchen, weitere Einzelheiten, auch erfinderischer Natur, zu ersehen sind.

Im Einzelnen zeigen:
- FIGUR 1: Ausrüstungssystem-Typschiffe unterschiedlicher Größe und Ausführung;
- FIGUR 2: ein Größenvergleich zwischen einem konventionellen Generator und einem HTS-Generator;
- FIGUR 3: einen Anordnungsvergleich für einen Waterjet mit HTS-Motor und einem konventionellen Motor;
- FIGUR 4: eine schematische Schnittdarstellung eines HTSStrombegrenzers mit Hilfsaggregaten für eine dezentrale Kältemittelerzeugung;
- FIGUR 5: den prinzipiellen Aufbau einer luftatmenden Brennstoffzellenanlage;
- FIGUR 6: den prinzipiellen Aufbau eines AusrüstungssystemSchiff-Fahrnetzes;
- FIGUR 7: den prinzipiellen Aufbau eines Automationssystems für eine Fregatte;
- FIGUR 8: den prinzipiellen Aufbau eines Automationssystems für eine Korvette;
- FIGUR 9: den prinzipiellen Aufbau eines Automationssystems für ein Schnellboot;
- FIGUR 10: den prinzipiellen Aufbau eines Automationssystems für ein großes unbemanntes Kampfboot und
- FIGUR 11: den prinzipiellen Aufbau eines Automationssystems für ein kleines unbemanntes Kampfboot.

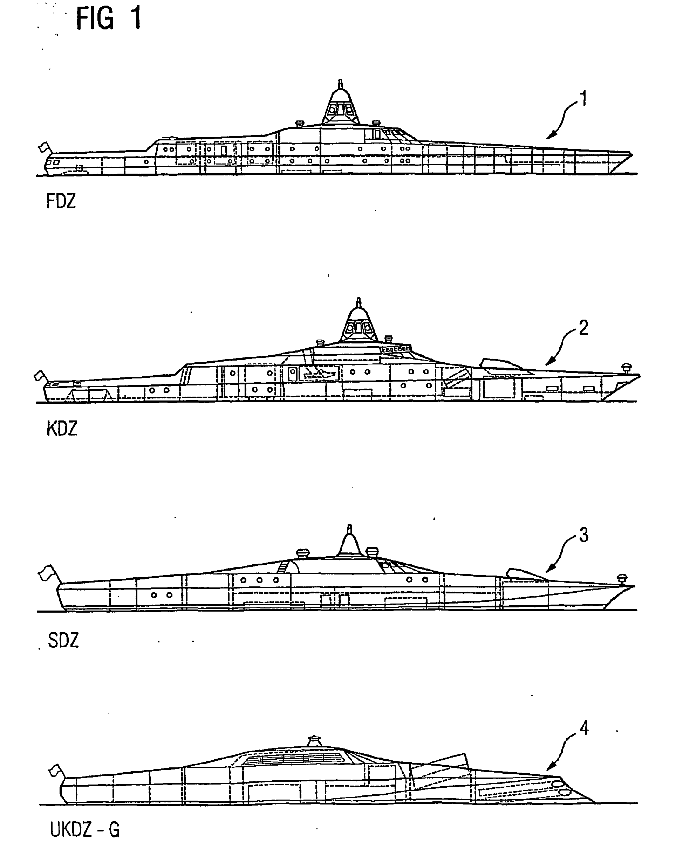

In FIGUR 1 bezeichnet 1 eine Fregatte in Ausrüstungssystem-Schiffausführung. Eine derartige Fregatte hat beispielsweise eine Typverdrängung von 5000 bis 6000 t, ihre Geschwindigkeit ist größer als 30 kn und sie besitzt als Antrieb zwei 7 Megawatt elektrische Ruderpropeller und zwei Twin-Waterjets von je 14 Megawatt, dazu gegebenenfalls einen Thruster im Bug. Die elektrische Energie wird beispielsweise durch zwei 16 Megawatt Generatoren und vier 4,5 Megawatt Brennstoffzellenanlagen erzeugt.

Mit 2 ist eine Korvette als Ausrüstungssystem-Schiff gezeigt. Diese hat beispielsweise eine Typverdrängung von ca. 2000 t, ihre Geschwindigkeit ist größer als 36 kn. Sie wird z.B. angetrieben durch einen 7 Megawatt elektrischen Ruderpropeller und zwei 14 Megawatt Twin-Waterjets. Sie hat zwei Generatoren von je 16 Megawatt sowie eine Brennstoffzellenanlage von zweimal 4,5 Megawatt.

3 bezeichnet ein Schnellboot als Ausrüstungssystem-Schiff. Dieses hat eine Wasserverdrängung von ca. 400 t, seine Geschwindigkeit ist größer als 40 kn. Es besitzt z.B. einen Ruderthruster von 0,25 Megawatt und einen Twin-Waterjet von 14 Megawatt. Die Generatorleistung beträgt 16 Megawatt. Die Leistung der Brennstoffzellenanlage beträgt zweimal 0,5 Megawatt.

Mit 4 ist ein unbemanntes Kampfboot bezeichnet, das eine Typverdrängung zwischen 75 und 200 t aufweist und dessen Geschwindigkeit größer als die Geschwindigkeit des Schnellbootes ist. Es besitzt z.B. im Heck einen Pumpjet als Ruderthruster und weist einen Waterjet von einer Leistung zwischen 5 und 10 Megawatt auf. Die Generatorleistung beträgt zwischen 4 und 8 Megawatt. Die Brennstoffzellenanlage leistet zwischen 2 und 4 Megawatt. Derartige unbemannte Kampfboote werden die Kriegführung der Zukunft mehr und mehr beeinflussen, da sie sowohl mit Raketen als auch mit Torpedos ausgerüstet Angriffe fahren können, ohne dass eigene Verluste an Menschenleben zu befürchten sind. Da sie unbemannt sind, können sie auch längere Zeit versteckt liegend als Beobachter dienen, die erst aktiv werden, wenn sich eine Gefahrenlage abzeichnet. Insgesamt ergibt sich durch die neuen Ausrüstungssystem-Schiffe die Möglichkeit einer deutlich besseren, moderneren Seekriegsführung als bisher.

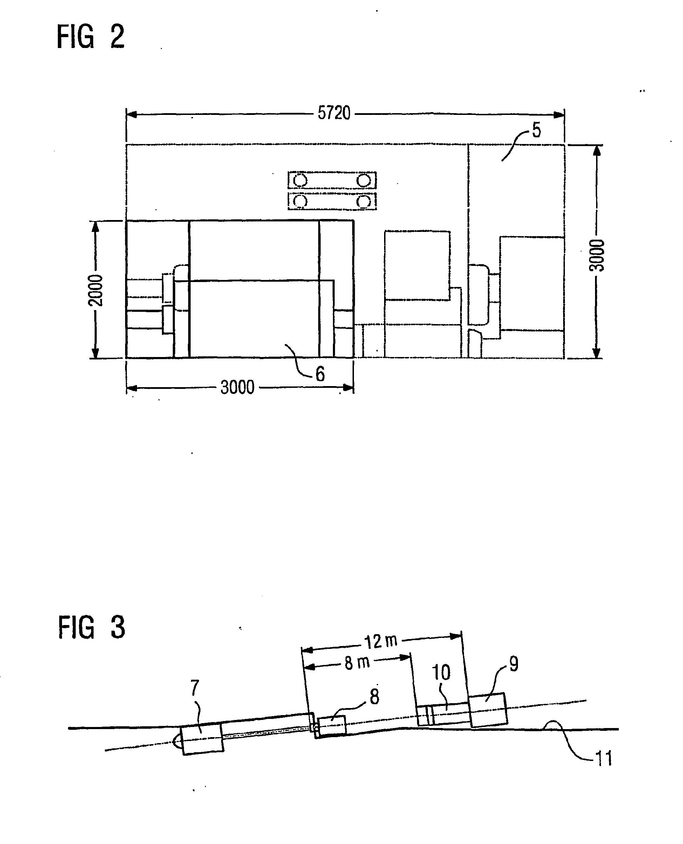

In FIGUR 2 bezeichnet 5 die Größe eines herkömmlichen Generators mit einer Leistung von 16 Megawatt und 3600 Umdrehungen/min. Mit 6 ist die Größe eines HTS-Generators gleicher Leistung und gleicher Umdrehungszahl bezeichnet. Zusätzlich sind in FIGUR 2 die Außenmaße der jeweiligen Aggregate eingezeichnet. Wie sich ergibt ist es möglich, den HTS-Generator erheblich kleiner und leichter zu bauen als den konventionellen Generator. Entsprechende Generatoren befinden sich in der Langzeit-Erprobung.

In FIGUR 3 bezeichnet 7 einen Waterjet und 8 einen HTS-Motor, der als Direktantrieb eingesetzt wird. Im Vergleich bezeichnet 9 die Größe eines konventionellen Motors als Direktantrieb und 10 einen konventionellen Motor mit einem regelmäßig benötigten Getriebe. Mit 11 ist die Außenhaut des Schiffes bezeichnet und wie sich ergibt, ist es durch den kleinbauenden HTS-Motor möglich, diesen wesentlich näher an den Waterjet heranzurücken, so dass sich auch eine kurze Antriebswelle ergibt. Insgesamt baut die Einheit Motor - Waterjet um wesentlich kleiner, so dass eine Anordnung in dem Doppelboden einer Fregatte oder einer Korvette möglich ist. Dies eröffnet völlig neue, vorteilhafte Möglichkeiten für die Gestaltung des Mittelteils einer Fregatte oder einer Korvette.

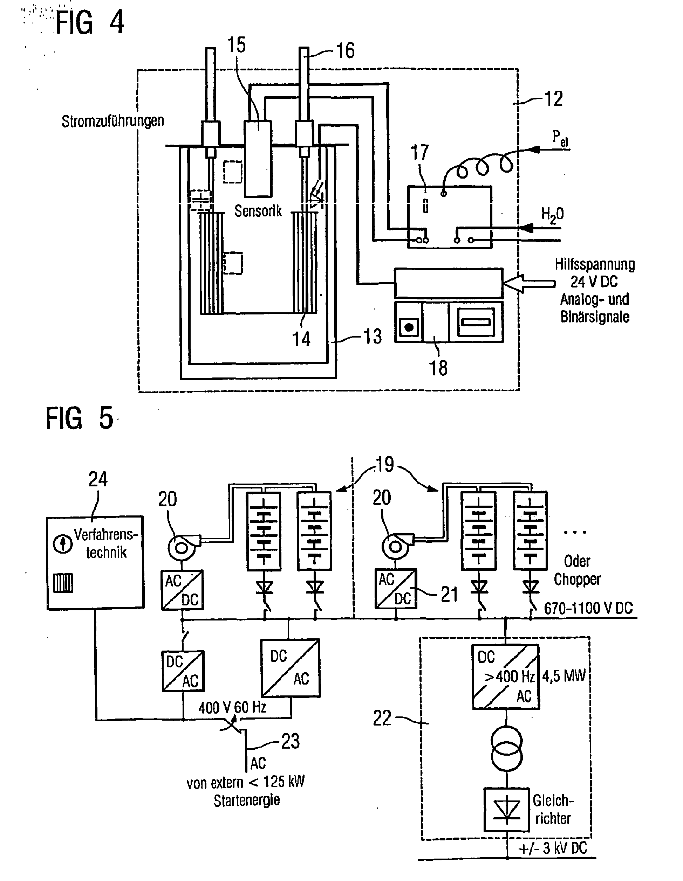

In FIGUR 4 ist ein HTS-Strombegrenzersystem 12 gezeigt, das als stand alone-System ausgebildet ist. Das Strombegrenzersystem 12 enthält als wesentliche Komponenten den Kryostaten 13 mit den in den Kryostaten 13 eingehängten Strombegrenzermodulen, auf denen in der Regel HTS-Leiter als flache Mäanderleiter angeordnet sind. Zu den Strombegrenzermodulen, die hierdurch gebildet werden, führen die Sammelschienen 16, die jeweils mit den aufzutrennenden Teilnetzen verbunden sind. Die Kühlung der Flüssigkeit im Kryostaten, z.B. flüssiger Stickstoff, erfolgt über den Kaltkopf 15, der aus dem Verdichter 17 mit Kältemittel versorgt wird. 18 bezeichnet eine Einheit mit Auswertegeräten, von denen auch Signale zu einem Schalter gehen, der nach dem Ansprechen des Strombegrenzers die einzelnen Stromkreise endgültig trennt. In den Verdichter führt eine Wasserleitung zur Rückkühlung. Anstelle des Verdichters kann der Kaltkopf auch an eine Sammelleitung angeschlossen werden. Dann handelt es sich nicht mehr um ein stand alone-Gerät, sondern um ein in einen Kühlmittelkreislauf einbezogenes Gerät.

Ebenso wie die Strombegrenzermodule in dem Kryostaten werden im Prinzip auch mit HTS-Wicklungen Transformatoren betrieben, die zwischen AC-Netzen unterschiedlicher Spannung an Bord der Ausrilstungssystem-Schiffe eingesetzt werden können und besonders geringe Verluste aufweisen. Insgesamt ergibt sich durch den Einsatz von HTS-Komponenten, wie Motoren und Generatoren sowie gegebenenfalls Transformatoren eine erhebliche Verkleinerung des Komponenten einer bestimmten zu installierenden Leistung. Ein weiterer wesentlicher Vorteil neben der Gewichts- und Platzreduktion durch die HTS-Ausrüstungssegmente!

In FIGUR 5 sind die Brennstoffzellenblöcke mit 19 bezeichnet. Sie bestehen aus zeichnerisch angedeuteten einzelnen Modulen, die in Reihe geschaltet werden. Der Wasserstoff wird den Modulen ohne Energieverbrauch zugeführt, während die Verdichtermotoren für die Oxidationsluft, es handelt sich ja erfindungsgemäß um luftatmende Brennstoffzellen, die mit 20 bezeichnet sind, Antriebsenergie benötigen. Die Verdichtermotoren weisen einen DC-/AC-Wandler auf. Sie werden von den Brennstoffzellen über ein DC-Netz mit Energie versorgt. Das DC-Netz wird über ein DC-/DC-Wandlermodul auf 3 kV gebracht, der üblichen DC-Bordnetzspannung für die Ausrüstungssystem-Schiffe. Da die Brennstoffzellen eine externe Startenergie benötigen, wird diese zugeführt 23 und über AC-/DC-Wandler umgewandelt. Die Brennstoffzellenanlage weist noch eine Einheit für die Steuerungstechnik mit Verbindungen zu den verfahrenstechnischen Komponenten der Anlage auf, so z.B. zu dem Wasserstofferzeuger oder -speicher.

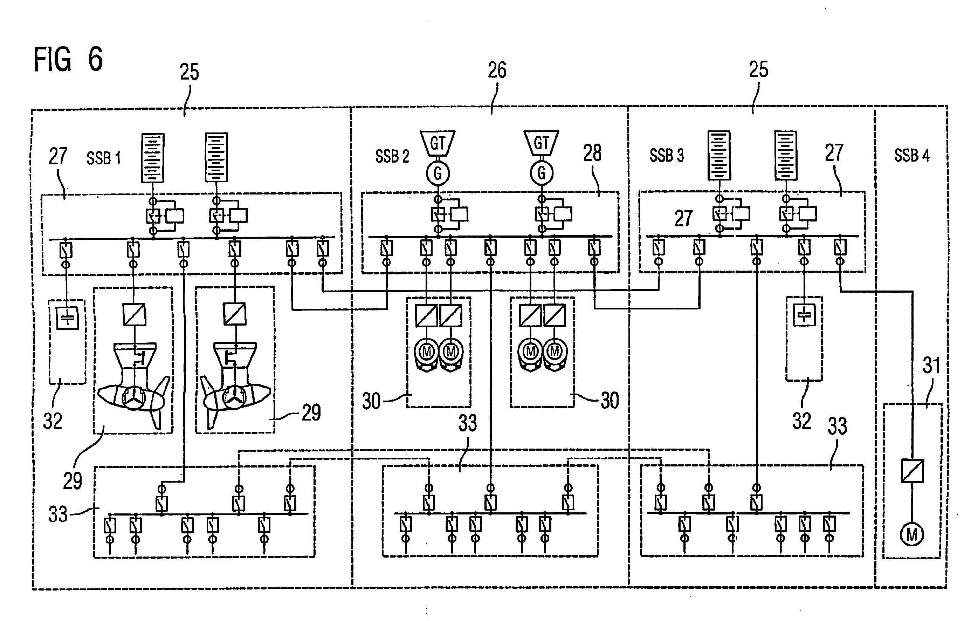

In FIGUR 6, die das Prinzip eines Bordnetzes für die Ausrüstungssystem-Schiffe zeigt, ist mit 25 die Energieerzeugung mit Brennstoffzellenanlagen symbolisiert. 26 symbolisiert die Energieerzeugung mit Gasturbinengeneratoren und 27 bezeichnet das Netz der Brennstoffzellen. 28 bezeichnet das Fahrnetz des Gasturbinengenerators und 29 die Marschfahrtantriebe. 30 bezieht sich auf die Höchstfahrtantriebe (Waterjets) und 31 auf einen Hilfsantrieb, z.B. einen Thruster. 32 symbolisiert die Energieversorgung der Waffensysteme und 33 die Einheiten für die Niederspannungsverteilung, ihre Schaltanlagen etc. (E-Werk). Die einzelnen Einheiten sind auf unterschiedliche Schiffssicherungsbereiche verteilt, symbolisiert durch SSB1, SSB2, SSB3 und SSB4. Es können noch weitere Schiffssicherungsbereiche dazukommen. Insgesamt ergibt sich ein Fahr- und Bordnetz, das auf eine erhebliche Kampfwertsteigerung gegenüber den bisherigen Ausführungen ausgerichtet ist und auch nach schweren Treffern, z.B. durch einen Flugkörper, das Schiff beherrschbar lässt und ihm die Möglichkeit gibt, sich vom Gefechtsfeld zu entfernen.

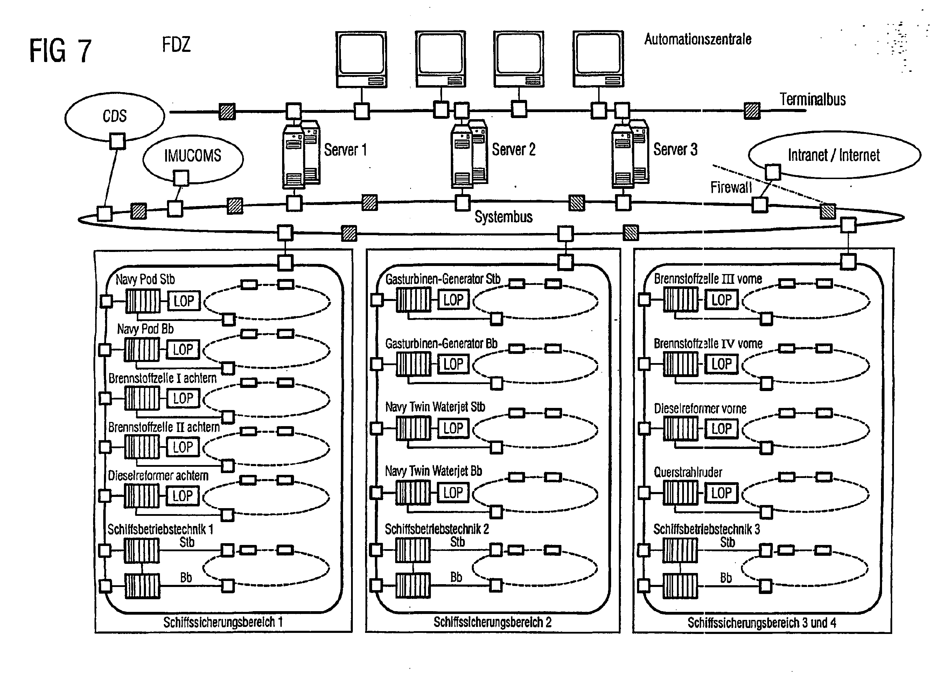

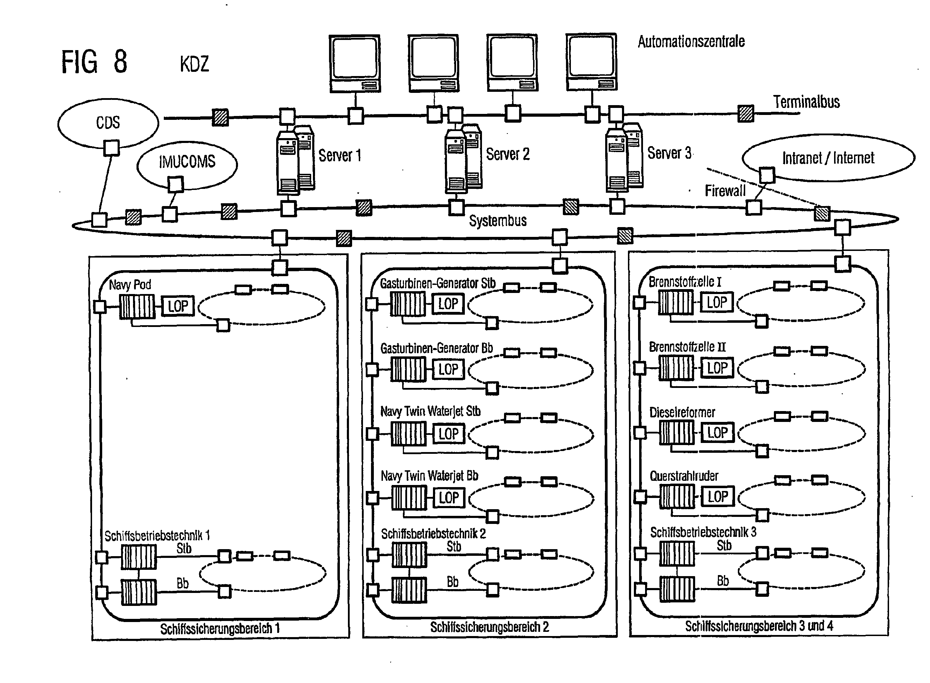

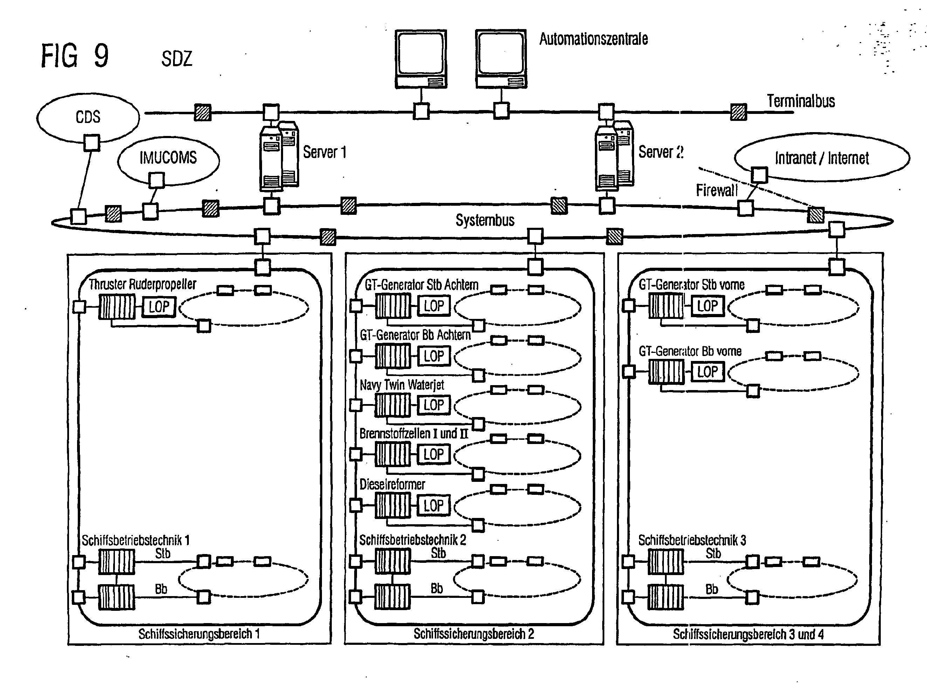

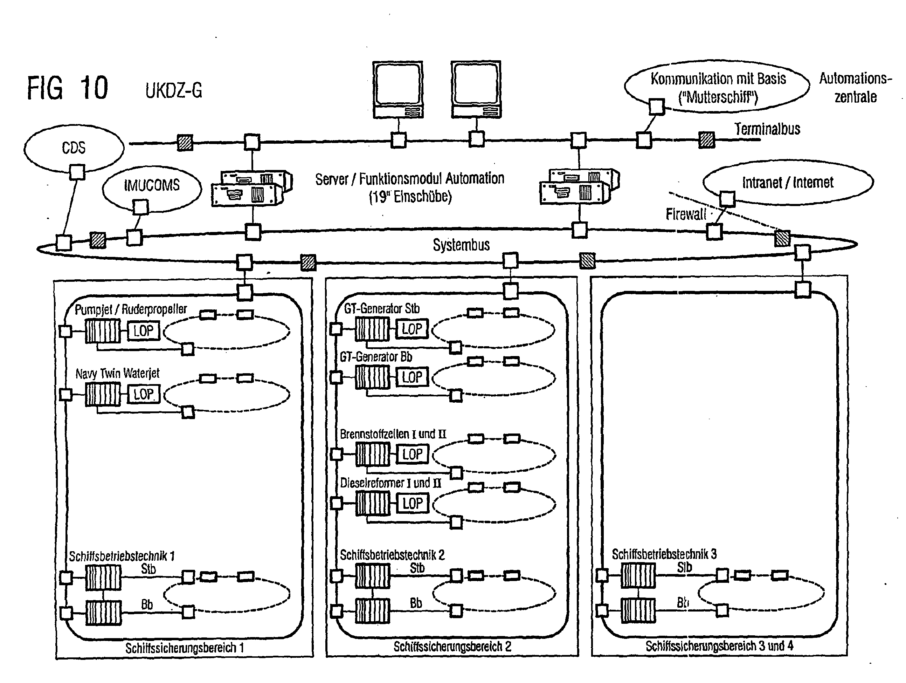

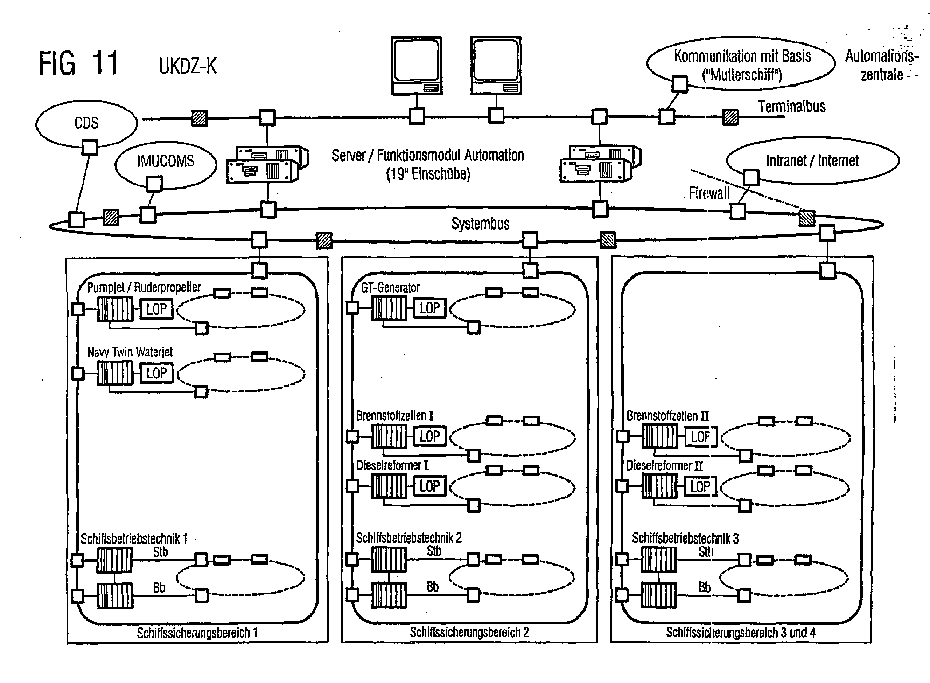

Die FIGUREN 7 bis 11, in denen die Automationszentralen der Ausrüstungssystem-Schiffe gezeigt sind, erklären sich durch die verwendeten Symbole und die Zeichnungen selbst. Auch hier ergibt sich die erfindungsgemäße Aufteilung in Schiffssicherungsbereiche und ihre Verbindung durch den Systembus, der gegebenenfalls noch durch Punkt-zu-Punkt-Verbindungen zu besonders wichtigen Stellen ergänzt werden kann. Die Punkt-zu-Punkt-Verbindungen bilden dann ein Overlay-Netz, das eine zusätzliche Redundanz ergibt. Sowohl für den Systembus als auch für das Overlay-Netz werden Glasfaserkabel eingesetzt. Der Systembus besitzt verschiedene Einwählpunkte, aus denen auch über einen tragbaren Computer Darstellungen, die sonst im Monitor auf der Brücke erscheinen, abgerufen und Steuerungsbefehle eingegeben werden können. Da der Systembus auch mit den Antriebskomponenten verbunden ist, kann so eine Hilfs-Schiffssteuerung erfolgen. Der Systembus ist vorteilhaft auch mit einem z.B. marineeigenen Intranet oder mit dem Internet verbunden. So können über ihn die Logistikaufgaben abgewickelt werden, z.B. die Überwachung aller Antriebskomponenten, Schaltgeräte usw.

Über einen Terminalbus sind die einzelnen Monitore und die Recheneinheiten auf der Brücke miteinander verbunden. Hier erfolgt die Darstellungsauswahl und hier werden die Hilfsfunktionen, z.B. für die Entscheidungsfindung des Brückenpersonals, generiert. Insgesamt ergibt sich für die Ausrüstungssystem-Schiffe eine bisher unbekannte Darstellungs- und Entscheidungshilfe, die es der Schiffsführung erlaubt, die Überwachung der dezentralen Antriebs-, der ElektroenergieErzeugungseinheiten, der Waffensysteme, aber auch der Systeme zur Überwachung aller sonstigen Bordfunktionen, schnell und einfach zu beherrschen. Wegen des Fortfalls eines zentralen Maschinenraums und anderer zentraler Stellen im Ausrüstungssystem-Schiff ist dies besonders wichtig, damit die Schiffsführung jederzeit die Kontrolle über das Schiff behält.

Es versteht sich, dass die Ausrifstungssegmente, soweit sie nicht marine(navy)-spezifisch sind, auch für zivile Schiffe oder für Schiffe, die hoheitliche Aufgaben wahrnehmen, eingesetzt werden können. Ihre spezifischen Vorteile bleiben dabei erhalten.

## Patentansprüche

1. Marine-Schiffstypen-Ausrüstungssystem für elektrisch angetriebene Marine-Schiffe unterschiedlicher Größe und Antriebsleistung, bei dem die Marine-Schiffe, z.B. Fregatten, Korvetten, Schnellboote, unbemannte Kampfboote, oder Versorger, zu bezeichnen als Ausrüstungssystem Schiffe, einheitliche Ausrüstungssegmente für Propulsion und Schiffsbetrieb aufweisen und wobei die einzelnen Marineschiffstypen Schiffskörper aufweisen, die typabhängig, d.h. größen- und aufgabenspezifisch ausgebildet sind, während die Ausrüstungssegmente für Propulsion, wie elektrische Ruderpropeller und Waterjets und Schiffsbetrieb unter Einschluss der Energieerzeugung, der Energieverteilung und Automation typunabhängig ausgestaltet und je nach Antriebsleistung und Aufgabe der einzelnen Marine-Schiffe kombinierbar sind, wobei die Ausrüstungssegmente vorgefertigt an unterschiedlichen Orten im Schiffskörper installierbar ausgebildet sind.

2. Marine-Schiffetypen-Ausrtistungssystem nach Anspruch 1,
**dadurch gekennzeichnet , dass** die Ausrüstungssegmente im Verhältnis zu ihrer Leistung kleine und leichte Propulsionsausrüstungssegmente umfassen, die elektrische Motoren in Hoch-Temperatur-Supraleitungs, abgekürzt, HTS-Technik aufweisen, insbesondere Motoren, die mit Flüssigneon oder Flüssigstickstoff direkt oder indirekt gekühlte Läuferwicklungen aufweisen.

3. Marine- Schiffstypen-Ausrüstungssystem nach Anspruch 1 oder 2,
**dadurch gekennzeichnet , dass** die Ausrüstungssegmente im Verhältnis zu ihrer Leistung kleine und leichte Energieerzeugungseinheiten aufweisen, die als Verbrennungskraftmaschinen-Generatorsätze auf Einheitsfundamenten ausgebildet sind.

4. Marine-Schiffstypen-Ausrüstungssystem nach Anspruch 3,
**dadurch gekennzeichnet , dass** die Verbrennungskraftmaschinen-Generatorsätze mit Generatoren in HTS-Technik versehen sind, die insbesondere Wicklungen aufweisen, die mit Flüssigneon oder Flüssigstickstoff direkt oder indirekt gekühlt sind.

5. Marine-Schiffstypen-Ausrüstungssystem nach Anspruch 2, 3 oder 4,
**dadurch gekennzeichnet, dass** die Motoren und Generatoren schockfest mit einer äußeren und einer inneren Schockdämpfung ausgebildet sind.

6. Marine-Schiffstypen-Ausrüstungssystem nach Anspruch 5,
**dadurch gekennzeichnet , dass** die Motoren und Generatoren elastisch aufgestellt sind, insbesondere auf Einheitsfundamenten und zusätzlich ein elastisch mit dem Maschinengehäuse verbundenes Ständer-Läufer system aufweisen, das sich unabhängig von dem Gehäuse bewegen kann, d.h., eine im Gehäuse unabhängig bewegliche Einheit mit eigenen Schockdämpfungselementen bildet.

7. Marine-Schiffstypen-Ausrüstungssystem nach Anspruch 1, 2, 3, 4, 5 oder 6,
**dadurch gekennzeichnet , dass** die Ständer der Motoren und Generatoren Luftspaltwicklungen aufweisen.

8. Marine-Schiffstypen-Ausrüstungssystem nach einem oder mehreren der vorhergehenden Ansprüche,
**dadurch gekennzeichnet , dass** die Schiffskörper ein Leitungssystem für flüssigen Stickstoff oder für flüssiges Neon aufweisen, an das HTS-Komponenten, wie Motoren, Generatoren und gegebenenfalls Strombegrenzer, insbesondere über Schnellkupplungen, anschließbar sind.

9. Marine-Schiffstypen-Ausrüstungssystem nach einem oder-mehreren der vorhergehenden Ansprüche,
**dadurch gekennzeichnet , dass** im Schiffskörper zumindest eine Luftzerlegungseinheit zur Erzeugung von flüssigem Stickstoff angeordnet ist, die über Rohrleitungen mit den einzelnen HTS-Komponenten im Schiffskörper verbunden ist.

10. Marine-Schiffstypen-Ausrüstungsstem nach einem oder mehreren der vorhergehenden Ansprüche,
**dadurch gekennzeichnet , dass** die einzelnen Ausrüstungssystem-Typschiffe emissionsarm arbeitende, dezentral installierbare, Elektroenergieerzeugungseinheiten aufweisen.

11. Marine-Schiffstypen-Ausrüstungssystem nach Anspruch 10,
**dadurch gekennzeichnet, dass** die einzelnen Ausrüstungssystem-Schiffe Verbrennungskraftmaschinen mit einer Abgaseinführung in das Umgebungswasser der Schiffsrümpfe aufweisen.

12. Marine-Schiffstypen-Ausrüstungssystem nach einem oder mehreren der vorhergehenden Ansprüche,
**dadurch gekennzeichnet , dass** die Typschiffe emissionslos arbeitende Energieversorgungseinheiten, insbesondere in Form von luftatmenden Brennstoffzellen aufweisen, die vorzugsweise ihre Energie in ein DC-Netz einspeisen.

13. Marine-Schiffstypen-Ausrüstungssystem nach Anspruch 12,
**dadurch gekennzeichnet , dass** die Brennstoffzellen als Polymer-Electrolys-Membran, abgekürzr PEM;Brennstoffzellen ausgebildet sind.

14. Marine-Schiffstypen-Ausrüstungssystem nach Anspruch 12,
**dadurch gekennzeichnet, dass** die Brennstoffzellen als Methanol-Direkt-Fuelcells, abgekürzt MDFC, oder Molten-Carbonate- Fuelcells, abgekürzt MCFC, ausgebildet sind.

15. Marine-Schiffstypen-Ausrüstungssystem nach Anspruch 12, 13 oder 14,
**dadurch gekennzeichnet, dass** die PEM-und die MDFC- oder MCFC-Brennstoffzellen sowie gegebenenfalls andere Brennstoffzellen mit höherer Betriebstemperatur als die PEM-Brennstoffzellen einen Energie- und Wärmeverbund bilden, in dem sie ihrer unterschiedlichen Dynamik entsprechend Energie bedarfsgerecht erzeugen.

16. Marine-Schiffstypen-Ausrüstungssystem nach Anspruch 12, 13 oder 15,
**dadurch gekennzeichnet , dass** die Brennstoffzellen aus Wasserstoffspeichern versorgt werden, die durch Dieselreformer gefüllt werden.

17. Marine-Schiffstypen-Ausrüstungssystem nach einem oder mehreren der Ansprüche 12 bis 16,
**dadurch gekennzeichnet , dass** die durch den Betrieb der MLFC oder MDFC und/oder der Dieselreformer entstehenden Abgase dem Umgebungswasser der Schiffsrümpfe beigemischt werden.

18. Marine- Schiffstypen-Ausrüstungssystem nach einem oder mehreren der vorhergehenden Ansprüche,
**dadurch gekennzeichnet , dass** die Ausrüstungssystem-Schiffe ruderblattlos ausgebildet sind.

19. Marine-Schiffstypen-Ausrüstungssystem nach Anspruch 18,
**dadurch gekennzeichnet , dass** die Ausrüstungssystem-Schiffe zur Steuerung Ruderpropeller und/oder Querstrahleinrichtungen aufweisen.

20. Marine-Schiffstypen-Ausrüstungssystem nach Anspruch 18 oder 19,
**dadurch gekennzeichnet, dass** die Ausrüstungssystem-Schiffe unabhängig voneinander steuerbare Waterjets, insbesondere paarweise angeordnet, aufweisen, die eine Kursänderung der Schiffe bewirken können.

21. Marine-Schiffstypen-Ausrüstungssystem nach einem oder mehreren der vorhergehenden Ansprüche,
**dadurch gekennzeichnet , dass** die Ausrüstungssystem-Schiffe AC- und DC-Teilnetze zur Verbindung der einzelnen Energieerzeugungs- und Verbrauchereinheiten aufweisen.

22. Marine-Schiffstypen-Ausrüstungssystem nach Anspruch 21,
**dadurch gekennzeichnet, dass** zwischen den Teilnetzen Stromrichter angeordnet sind, die die Teilnetze miteinander verbinden.

23. Marine-Schiffstypen-Ausrüstungssystem nach Anspruch 21 oder 22,
**dadurch gekennzeichnet, dass** das elektrische Netzsystem derart aufgebaut ist, dass es DC-Teilnetze mit unterschiedlichen Spannungen und/oder AC-Teilnetze mit unterschiedlichen Frequenzen und Spannungen aufweist.

24. Marine-Schiffstypen-Ausrüstungssystem nach Anspruch 21 oder 22,
**dadurch gekennzeichnet , dass** zwischen den Brennstoffzellen und den elektrischen Ruderpropellern ein DC-Netz vorgesehen ist, das mit einem HTS-Strombegrenzer ausgerüstet ist.

25. Marine-Schifftypen-Ausrüstungssystem nach Anspruch 21, 22, 23 oder 24,
**dadurch gekennzeichnet , dass** das Bordnetz in miteinander verbundene Teilnetze unterteilt ist, deren Verbindungen HTS-Strombegrenzer und/oder schnelle Halbleiterschalter aufweisen.

26. Marine-Schiffstypen-Ausrüstungssystem nach Anspruch 25,
**dadurch gekennzeichnet , dass** im Bordnetz schnelle Halbleiterschalter angeordnet sind, mit denen einzelne Netzteile oder einzelne Ausrüstungssegmente bei einem Treffer in das Versorgungsnetzwerk auf eine Versorgung durch nicht getroffene Teile des Versorgungsnetzwerkes so schnell umgeschaltet werden können, dass kein elektrischer Schaden in den Komponenten oder Ausrüstungssegmenten auftritt.

27. Marine-Schiffstypen-Ausrüstungssystem nach Anspruch 21, 22, 23, 24, 25 oder 26,
**dadurch gekennzeichnet , dass** zwischen dem, insbesondere durch eine Gasturbine angetriebenen Generator für die Waterjets ein Teilnetz höherer Frequenz angeordnet ist, z.B. ein Teilnetz mit bis zu 400 Hz.

28. Marine-Schiffstypen-Ausrüstungssystem nach einem oder mehreren der vorhergehenden Ansprüche,
**dadurch gekennzeichnet , dass** die Ausrüstungssystem-Typschiffe ein Automatisierungssystem aufweisen, das eine Automationszentrale aufweist, die über ein, insbesondere redundant ausgeführtes Bussystem, insbesondere über Glasfaserbusse, mit den einzelnen Schiffsbereichen verbunden ist.

29. Marine- Schiffstypen-Ausrüstungssystem nach Anspruch 28,
**dadurch gekennzeichnet , dass** das Bussystem auf ein segmentiertes Netzwerk zugreift, wobei der Bus vorzugsweise redundant ausgelegt ist und das segmentierte Netzwerk der einzelnen Schiffssicherungsbereiche mit der Automationszentrale verbindet.

30. Marine-Schiffstypen-Ausrüstungssystem nach Anspruch 28 oder 29,
**dadurch gekennzeichnet , dass** die Automationszentrale automatisch systemgesteuerte Entscheidungen fällt, wenn schiffssicherungstechnisch zwingende Maßnahmen es erfordern.

31. Marine-Schiffstypen-Ausrüstungssystem nach Anspruch 28, 29 oder 30,
**dadurch gekennzeichnet , dass** die Automationszentrale ein Expertensystem aufweist, das als übergeordnete Ebene zur Automation ausgebildet ist und die Anzeige aller Messwerte, die Darstellung der Anlagenstati und der Schaltungskonstellationen in zusammengefasster, übersichtlicher Form mit Entscheidungsvorschlägen erlaubt.

32. Marine-Schiffstypen-Ausrüstungssystem nach Anspruch 29, 30 und 31,
**dadurch gekennzeichnet , dass** die Ausrüstungssystem-Schiffe ein Life-Cycle-Managementsystem und Zustandsmonitoringsystem zur Steuerung der Logistik für die Ausrüstungssystem-Schiffe aufweist.

33. Marine-Schiffstypen-Ausrüstungssystem nach einem oder mehreren der Ansprüche 28 bis 32,
**dadurch gekennzeichnet , dass** es ein Battle-Damage-Controlsystem aufweist, das in die Automationssysteme eingearbeitet ist und eine Darstellung aller Innenräume und ihrer Zustände auf zumindest einem Monitor erlaubt.

34. Marine-Schiffstypen-Austrüstungssystem nach einem oder mehreren der Ansprüche 1 bis 32,
**dadurch gekennzeichnet , dass** die Ausrüstungssegmente für Propulsion- und Schiffsbetrieb und die damit verbundenen Komponenten, Schiffe der Handelsmarine, für Küstenwachboote, für Zollboote etc. und für seegehende Yachten einsetzbar ausgebildet sind.

## Claims

1. Navy vessel type equipment system for electrically propelled navy vessels of various sizes and propulsion power, in which Navy vessels, for example frigates, corvettes, high-speed patrol boats, unmanned attack boats or supply vessels (which can be referred to as equipment system vessels) have standard equipment segments for propulsion and vessel operation and wherein the individual navy vessel types have vessel hulls which are designed on a type-dependent basis, that is to say on a size and task-specific basis, while the equipment segments for propulsion, such as electrical steering propellers and waterjets and vessel operation including power generation, power distribution and automation are designed independently of the type and can be combined depending on the propulsion power and task of the individual navy vessels, wherein the equipment segments are designed such that they can be installed in a prefabricated manner at different locations in the vessel hull.

2. Navy vessel type equipment system according to Claim 1, **characterized in that** in comparison to their power, the equipment segments comprise small and light propulsion equipment segments which have electric motors using high-temperature superconducting, abbreviated to HTS, technology, in particular motors which have rotor windings that are cooled directly or indirectly by liquid neon or liquid nitrogen.

3. Navy vessel type equipment system according to Claim 1 or 2, **characterized in that** in comparison to their power, the equipment segments have small and light power generation units which are designed as internal combustion engine generator sets on standard foundations.

4. Navy vessel type equipment system according to Claim 3, **characterized in that** the internal combustion engine generator sets are provided with generators using HTS technology, which, in particular, have windings which are cooled directly or indirectly with liquid neon or liquid nitrogen.

5. Navy vessel type equipment system according to Claim 2, 3 or 4, **characterized in that** the motors and generators are designed to be shock-resistant with outer and inner shock damping.

6. Navy vessel type equipment system according to Claim 5, **characterized in that** the motors and generators are installed elastically, in particular on standard foundations and in addition have a stator/rotor system which is elastically connected to the machine housing and can move independently of the housing, that is to say forms a unit which can move independently in the housing and has its own shock damping elements.

7. Navy vessel type equipment system according to Claim 1, 2, 3, 4, 5 or 6 **characterized in that** the stators of the motors and generators have air-gap windings.

8. Navy vessel type equipment system according to one of more of the preceding claims, **characterized in that** the vessel hulls have a pipeline system for liquid nitrogen or for liquid neon, to which HTS components such as motors, generators and possibly current limiters can be connected, in particular via quick-release couplings.

9. Navy vessel type equipment system according to one or more of the preceding claims, **characterized in that** at least one air decomposition unit for the production of liquid nitrogen is arranged in the vessel hull and is connected via pipelines to the individual HTS components in the vessel hull.

10. Navy vessel type equipment system according to one or more of the preceding claims,
**characterized in that** the individual equipment system type vessels have electrical power generation units which operate with low emissions and can be installed in a decentralized manner.

11. Navy vessel type equipment system according to Claim 10, **characterized in that** the individual equipment system vessels have internal combustion engines whose exhaust gas is introduced into the water surrounding the vessel hulls.

12. Navy vessel type equipment system according to one or more of the preceding claims, **characterized in that** the type vessels have power supply units which operate without any emissions, in particular in the form of air-breathing fuel cells, which preferably feed their power to a DC network.

13. Navy vessel type equipment system according to Claim 12, **characterized in that** the fuel cells are in the form of polymer electrolyte membrane, abbreviated to PEM, fuel cells.

14. Navy vessel type equipment system according to Claim 12, **characterized in that** the fuel cells are in the form of methanol direct fuel cells, abbreviated to MDFC, or molten carbonate fuel cells, abbreviated to MCFC.

15. Navy vessel type equipment system according to Claim 12, 13 or 14,
**characterized in that** the PEM and the MDFC or MCFC fuel cells, possibly as well as other fuel cells with a higher operating temperature than the PEM fuel cells, form a power and heat system in which they produce power as required, corresponding to their different dynamics.

16. Navy vessel type equipment system according to Claim 12, 13 or 15,
**characterized in that** the fuel cells are supplied from hydrogen reservoirs which are filled by diesel reformers.

17. Navy vessel type equipment system according to one or more of Claims 12 to 16,
**characterized in that** the exhaust gases which are produced by the operation of the MLFC or MDFC and/or the diesel reformers are mixed with the water surrounding the vessel hulls.

18. Navy vessel type equipment system according to one or more of the preceding claims,
**characterized in that** the equipment system vessels are designed without rudder blades.

19. Navy vessel type equipment system according to Claim 18,
**characterized in that** the equipment system vessels have steering propellers and/or lateral thrusters.

20. Navy vessel type equipment system according to Claim 18 or 19,
**characterized in that** the equipment system vessels have waterjets which can be controlled independently of one another, in particular waterjets arranged in pairs, which can change the heading of the vessels.

21. Navy vessel type equipment system according to one of more of the preceding claims,
**characterized in that** the equipment system vessels have AC and DC network elements for connection of the individual power generation and load units.

22. Navy vessel type equipment system according to Claim 21,
**characterized in that** converters which connect the network elements to one another are arranged between the network elements.

23. Navy vessel type equipment system according to Claim 21 or 22,
**characterized in that** the electrical network system is designed such that it has DC network elements with different voltages and/or AC network elements with different frequencies and voltages.

24. Navy vessel type equipment system according to Claim 21 or 22,
**characterized in that** a DC network which is equipped with an HTS current limiter is provided between the fuel cells and the electrical steering propellers.

25. Navy vessel type equipment system according to Claim 21, 22, 23 or 24,
**characterized in that** the on-board network is subdivided into network elements which are connected to one another and whose connections have HTS current limiters and/or high-speed semiconductor switches.

26. Navy vessel type equipment system according to Claim 25,
**characterized in that** high-speed semiconductor switches are arranged in the on-board network, by means of which individual network elements or individual equipment segments can be quickly switched in the event of a hit on the supply network to a supply by parts of the supply network which are not affected by the hit, such that no electrical damage occurs to the components or equipment segments.

27. Navy vessel type equipment system according to Claim 21, 22, 23, 24, 25 or 26,
**characterized in that** a higher-frequency network element, for example a network element at up to 400 Hz, is arranged between the generator, which in particular is driven by a gas turbine, for the waterjets.

28. Navy vessel type equipment system according to one or more of the preceding claims,
**characterized in that** the equipment system type vessels have an automation system which has an automation control centre which is connected to the individual vessel areas via a bus system which, in particular, is a redundant bus system, in particular via glass-fibre buses.

29. Navy vessel type equipment system according to Claim 28,
**characterized in that** the bus system accesses a segmented network wherein the bus preferably has a redundant design and connects the segmented network in the individual vessel protection areas to the automation control centre.

30. Navy vessel type equipment system according to Claim 28 or 29,
**characterized in that** the automation control centre automatically makes system-controlled decisions when urgent measures for vessel protection require this.

31. Navy vessel type equipment system according to Claim 28, 29 or 30,
**characterized in that** the automation control centre has an expert system which is at a higher level than the automation and which allows all the measured values to be indicated, and allows the system statistics and the circuit constellations to be displayed in a comprehensive, clear form with decision proposals.

32. Navy vessel type equipment system according to Claim 29, 30 and 31,
**characterized in that** the equipment system vessels have a life cycle management system and a status monitoring system for controlling the logistics for the equipment system vessels.

33. Navy vessel type equipment system according to one or more of Claims 28 to 32,
**characterized in that** Navy vessel type equipment system has a battle damage control system which is incorporated in the automation systems and allows all of the internal areas and their states to be displayed on at least one monitor.

34. Navy vessel type equipment system according to one or more of Claims 1 to 32,
**characterized in that** the equipment segments for propulsion and vessel operation and the components connected to them are designed such that they can be used for merchant navy vessels, for coastal defense boats, for customs boats etc. and for sea-going yachts.

## Revendications

1. Système d'équipement pour différents types de navire de guerre à entraînement électrique, de différentes dimensions et de différentes puissances d'entraînement, dans lequel les navires de guerre, par exemple des frégates, des corvettes, des navires rapides, des navires de combat téléguidés ou des navires logistiques, qui seront désignés par navires à système d'équipement, comportent des segments d'équipement pour la propulsion et l'entraînement du navire et dans lequel les différents types de navire de guerre comportent une coque de navire qui est conformée en fonction du type de navire, par exemple spécifiquement à la dimension et aux missions, tandis que les segments d'équipement pour la propulsion, tels que l'hélice de gouvernail électrique et les hydrojets, et pour l'entraînement du navire y compris la génération d'énergie, la distribution d'énergie et l'automation, sont conformés en fonction du type de navire et sont combinables en fonction de la puissance d'entraînement et de la mission affectée à chaque navire de guerre, les segments d'armement étant conformés de façon à être préfabriqués et de façon à pouvoir être installés en différents emplacements dans la coque du navire.

2. Système d'équipement pour différents types de navire de guerre selon la revendication 1, **caractérisé en ce que** les segments d'équipement comportent, selon leur puissance, des segments d'équipement de propulsion de faible poids et de petite taille qui comprennent des moteurs électriques fonctionnant selon la technique supraconductivité à haute température, abrégé en HTS, en particulier des moteurs qui comportent des enroulements de rotor refroidis directement ou indirectement au néon liquide ou à l'azote liquide.

3. Système d'équipement pour différents types de navire de guerre selon la revendication 1 ou 2, **caractérisé en ce que** les segments d'équipement comportent, selon leur puissance, des unités de génération d'énergie de faible poids et de petite taille qui sont conformées en ensemble générateur/machine à combustion interne sur des bâtis unitaires.

4. Système d'équipement pour différents types de navire de guerre selon la revendication 3, **caractérisé en ce que** les ensembles générateur/machine à combustion interne sont dotés de générateur fonctionnant selon la technique HTS qui comportent en particulier des enroulements qui sont refroidis directement ou indirectement au néon liquide ou à l'azote liquide.

5. Système d'équipement pour différents types de navire de guerre selon la revendication 2, 3 ou 4, **caractérisé en ce que** les moteurs et les générateurs sont conformés pour résister aux chocs au moyen de dispositifs antichoc extérieur et intérieur.

6. Système d'équipement pour différents types de navire de guerre selon la revendication 5, **caractérisé en ce que** les moteurs et les générateurs sont installés élastiquement, en particulier sur des bâtis unitaires, et comportent en plus un système rotor/stator qui est relié élastiquement au carter de la machine et qui peut se déplacer indépendamment du carter, c'est-à-dire qu'il forme une unité mobile indépendante dotée d'éléments antichoc propres.

7. Système d'équipement pour différents types de navire de guerre selon la revendication 1, 2, 3, 4, 5 ou 6, **caractérisé en ce que** le stator des moteurs et des générateurs comporte des enroulements à entrefer.

8. Système d'équipement pour différents types de navire de guerre selon l'une ou plusieurs des revendications précédentes, **caractérisé en ce que** les coques de navire comportent un système de conduites pour azote liquide ou néon liquide auquel peuvent être raccordés des composants HTS, tels que des moteurs, des générateurs et le cas échéant des limiteurs de courant, en particulier par des couplages rapides.

9. Système d'équipement pour différents types de navire de guerre selon l'une ou plusieurs des revendications précédentes, **caractérisé en ce que** au moins une unité de séparation de l'air, destinée à générer de l'azote liquide, est disposée dans la coque du navire et est reliée par des conduites tubulaires aux éléments HTS dans la coque du navire.

10. Système d'équipement pour différents types de navire de guerre selon l'une ou plusieurs des revendications précédentes, **caractérisé en ce que** les différents types de navire à système d'équipement comportent des unités de génération d'énergie électrique fonctionnant à faibles émissions et pouvant être installées de façon décentralisée.

11. Système d'équipement pour différents types de navire de guerre selon la revendication 10, **caractérisé en ce que** les différents types de navire à système d'équipement comportent des machines à combustion interne dotées d'une évacuation des gaz d'échappement dans l'eau autour de la coque du navire.

12. Système d'équipement pour différents types de navire de guerre selon l'une ou plusieurs des revendications précédentes, **caractérisé en ce que** les différents types de navire comportent des unités d'alimentation en énergie fonctionnant sans émissions, en particulier sous forme de piles à combustible aérobies, qui alimentent avantageusement en énergie un réseau à courant continu.

13. Système d'équipement pour différents types de navire de guerre selon la revendication 12, **caractérisé en ce que** les piles à combustible sont conformées en piles de combustible à membrane électrolyte polymère, abrégé en PEM.

14. Système d'équipement pour différents types de navire de guerre selon la revendication 12, **caractérisé en ce que** les piles à combustible sont conformées en Methanol-Direct-Fuelcells, abrégé en MDFC, ou Carbonate fondue-Fuelcells, abrégé en MCFC.

15. Système d'équipement pour différents types de navire de guerre selon la revendication 12, 13 ou 14, **caractérisé en ce que** les piles à combustible PEM et MDFC ou MCFC ainsi que le cas échéant d'autres piles à combustible à température de fonctionnement supérieure à celle des piles à combustible PEM forment un système combiné Chaleur/Energie dans lequel elles génères selon le besoin de l'énergie en fonction de leurs différentes dynamiques.

16. Système d'équipement pour différents types de navire de guerre selon la revendication 12, 13 ou 15, **caractérisé en ce que** les piles à combustible sont alimentées à partir de réservoirs d'hydrogène qui sont remplis par des reformeurs diesels.

17. Système d'équipement pour différents types de navire de guerre selon l'une ou plusieurs des revendications 12 à 16, **caractérisé en ce que** les gaz d'échappement générés par le fonctionnement des MLFC ou MDFC et/ou les reformeurs sont mélangés à l'eau autour de la coque du navire.

18. Système d'équipement pour différents types de navire de guerre selon l'une ou plusieurs des revendications précédentes, **caractérisé en ce que** les navires à système d'équipement sont conformés sans safran.

19. Système d'équipement pour différents types de navire de guerre selon la revendication 18, **caractérisé en ce que** les navires à système d'équipement comportent des hélices de gouvernail et/ou des dispositifs à jets transversaux pour effectuer la commande.

20. Système d'équipement pour différents types de navire de guerre selon la revendication 18 ou 19, **caractérisé en ce que** les navires à système d'équipement comportent des hydrojets, disposés en particulier par paire, qui peuvent être commandés indépendamment et qui peuvent modifier la route des navires.

21. Système d'équipement pour différents types de navire de guerre selon l'une ou plusieurs des revendications précédentes, **caractérisé en ce que** les navires à système d'équipement comporte des sous-réseaux à courant continu ou à courant alternatif pour le raccordement des unités de génération d'énergie et des unités d'appareils consommateurs.

22. Système d'équipement pour différents types de navire de guerre selon la revendication 21, **caractérisé en ce que** des redresseurs de courant, qui relient entre eux les sous-réseaux, sont disposés entre les sous-réseaux.

23. Système d'équipement pour différents types de navire de guerre selon la revendication 21 ou 22, **caractérisé en ce que** le système de réseaux électriques est structuré de telle façon qu'ils comportent des sous-réseaux à courant continu présentant différentes tensions et/ou des sous-réseaux à courant alternatif présentant différentes fréquences et tensions.

24. Système d'équipement pour différents types de navire de guerre selon la revendication 21 ou 22, **caractérisé en ce qu'**il est prévu entre les piles à combustible et les hélices de gouvernail électriques un réseau à courant continu qui est équipé d'un limiteur de courant HTS.

25. Système d'équipement pour différents types de navire de guerre selon la revendication 21, 22, 23 ou 24, **caractérisé en ce que** le réseau du bord est subdivisé en sous-réseaux reliés entre eux dont les connexions comportent des limiteurs de courant et des circuits à semi-conducteurs rapides.

26. Système d'équipement pour différents types de navire de guerre selon la revendication 25, **caractérisé en ce que** des commutateurs à semi-conducteurs rapides sont disposés dans le réseau du bord qui permettent, lorsque le réseau d'alimentation est touché, de commuter des sous-réseaux individuels ou des segments d'équipement individuels sur une alimentation au moyen de parties non touchées du réseau d'alimentation, et ce avec une rapidité telle que les composants ou les segments d'équipement ne subissent aucun endommagement électrique.

27. Système d'équipement pour différents types de navire de guerre selon la revendication 21, 22, 23, 24, 25 ou 26, **caractérisé en ce qu'**un sous-réseau de fréquence plus élevée, par exemple un sous-réseau dont la fréquence peut aller jusqu'à 400 Hz, est disposé entre le générateur entraîné en particulier par une turbine à gaz et destiné aux hydrojets.

28. Système d'équipement pour différents types de navire selon l'une ou plusieurs des revendications précédentes, **caractérisé en ce que** les différents types de navire à système d'équipement comporte un système d'automatisation qui comporte une centrale d'automation qui est.reliée par un système de bus, en particulier redondant, en particulier un bus à fibre de verre, aux régions de navire individuelles.

29. Système d'équipement pour différents types de navire de guerre selon la revendication 28, **caractérisé en ce que** le système de bus à accès à un réseau segmenté, le bus étant avantageusement conçu de façon redondante et le réseau segmenté des régions de sécurité de navire individuelles étant relié à la centrale d'automation.

30. Système d'équipement pour différents types de navire de guerre selon la revendication 28 ou 29, **caractérisé en ce que** la centrale d'automation prend automatiquement des décisions commandées par le système lorsque la sécurité du navire l'exige impérativement.

31. Système d'équipement pour différents types de navire de guerre selon la revendication 28, 29 ou 30, **caractérisé en ce que** la centrale d'automation comporte un système expert qui est conformé en niveau supérieur d'automation et qui permet l'affichage de toutes les valeurs de mesure, la représentation des états de l'installation et de la position des circuits sous une forme globale et claire avec des propositions de décision.

32. Système d'équipement pour différents types de navire de guerre selon les revendications 29, 30 et 31, **caractérisé en ce que** les navires à système d'équipement comportent un système de gestion Life-Cycle et un système de surveillance d'états pour la commande de la logistique des navires à système d'équipement.

33. Système d'équipement pour différents types de navire de guerre selon l'une ou plusieurs des revendications 28 à 32, **caractérisé en ce qu'**il comporte un système Battle-Damage-Control qui est traité dans les systèmes d'automation et qui permet une représentation de tous les espaces intérieurs et leurs états sur au moins un écran.

34. Système d'équipement pour différents types de navire de guerre selon l'une ou plusieurs des revendications 1 à 32, **caractérisé en ce que** les segments d'équipement pour la propulsion et l'entraînement du navire et les composants associés sont conformés de façon à être utilisables dans des navires de commerce, des garde-côtes, des navires des douanes etc. et pour des yachts hauturiers.
